Europäisches Patentamt

(19) European Patent Office

Office européen des brevets

(11) Numéro de publication: **0 258 187**
**A1**

(12) # DEMANDE DE BREVET EUROPEEN

(21) Numéro de dépôt: **87810465.2**

(51) Int. Cl.⁴: **A 01 G 9/12**

(22) Date de dépôt: **17.08.87**

(30) Priorité: **29.08.86 CH 3465/86**

(43) Date de publication de la demande:
**02.03.88 Bulletin 88/09**

(84) Etats contractants désignés:
**AT BE CH DE ES FR GB IT LI NL**

(71) Demandeur: **Cosandier, Paul-André**
**10, chemin de Tolochenaz**
**CH-1110 Morges (CH)**

(72) Inventeur: **Cosandier, Paul-André**
**10, chemin de Tolochenaz**
**CH-1110 Morges (CH)**

(74) Mandataire: **Rochat, Daniel Jean et al**
**Bovard SA Ingénieurs-conseils ACP Optingenstrasse 16**
**CH-3000 Bern 25 (CH)**

(54) **Dispositif de support d'un tuteur pour la culture de plantes dans des récipients.**

(57) Le dispositif facilite la pose de treillages, d'arceux ou d'autres supports de plantes sur des bacs à fleurs. Chaque ensemble ajustable comporte deux organes d'accrochage (3), une barre extensible (7) et un embout (11). Ces éléments sont indépendants les uns des autres. La barre extensible (7), composée d'un élément tubulaire (8) et d'une tige filetée (9) vissée dans un écrou (10) solidaire de l'élément (8), supporte un embout (11) et presse deux organes d'accrochage (3) contre des parois opposées du récipient

FIG. 1

EP 0 258 187 A1

## Description

### Dispositif de support d'un tuteur pour la culture de plantes dans des récipients

On connaît, notamment par les documents de brevets ou de demandes de brevets suivants : FR-2 541 076, CH-408 516, DE-OS-1 493 926, des dispositifs de maintien qui sont prévus pour des plantes en pots et permettent de fixer un tuteur constitué d'une barre tenue verticalement. Cependant, la culture des plantes dans des bacs allongés conduit souvent à l'utilisation d'organes de maintien ou tuteurs qui peuvent être de constitution et d'apparence très différentes. Ces tuteurs, qui peuvent être des treillis, des grilles extensibles, des arceaux, des ensembles de barres articulées, etc. jouent un rôle dans l'esthétique et dans l'originalité de la présentation des plantes, de sorte que leurs dimensions, les matériaux dont ils sont constitués et leur apparence sont essentiellement variables.

Il existait un besoin pour un dispositif simple susceptible de s'adapter à des organes de maintien de différents types et de s'adapter également à des récipients de différentes formes et dimensions, tels que des bacs allongés en matière plastique, en bois ou en matériau composite, ayant des parois longitudinales parallèles ou inclinées, etc.

Dans ce but, la présente invention a pour objet un dispositif de support d'un tuteur pour la culture de plantes dans des récipients, caractérisé en ce qu'il comprend un ou plusieurs ensembles d'éléments dont chaque ensemble est constitué de deux organes d'accrochage, d'une barre extensible et d'un ou plusieurs embouts glissant sur la barre, ces éléments étant agencés de manière à être fixés par l'appui de la barre extensible sur les éléments d'accrochage et par l'appui de ces derniers contre des parois opposées du récipient, ainsi que par l'engagement d'une partie extrême d'un tuteur dans chaque embout.

On va décrire ci-après, à titre d'exemple, une forme de réalisation de l'objet de l'invention en se référant au dessin annexé dont

la fig. 1 est une vue en perspective schématique d'un bac, équipé du dispositif de support, ce dernier comportant deux ensembles ajustables,

la fig. 2 est une vue en coupe d'un organe d'accrochage, représenté à plus grande échelle,

la fig. 3 est une vue en perspective d'un embout et

la fig. 4 une vue en coupe longitudinale partielle d'un bac équipé du dispositif de support.

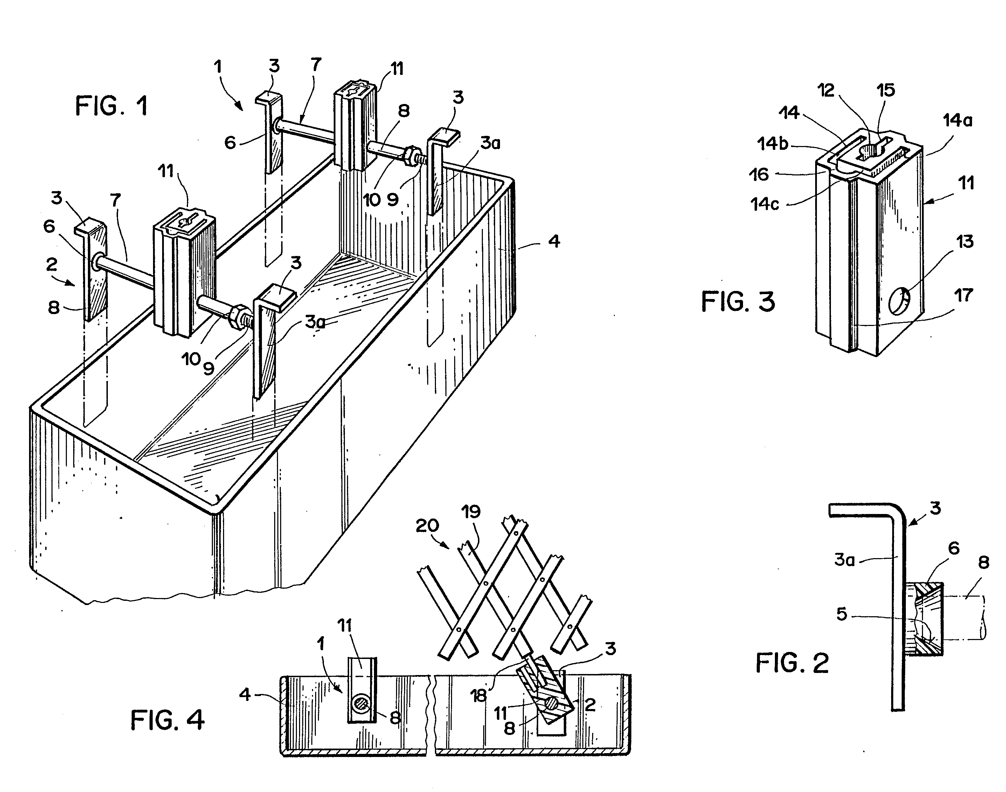

Au dessin, le dispositif comporte deux ensembles ajustables 1 et 2, constitués d'éléments indépendants et pareils. Dans chaque ensemble ajustable, on a deux organes d'accrochage 3, en forme de L, destinés à s'appliquer contre la face interne d'une paroi longitudinale d'un bac 4. Comme on le voit à la fig. 2, chaque organe d'accrochage 3 comporte, dans sa face tournée vers l'intérieur du bac, un logement 5 délimité par une nervure annulaire 6 à profil triangulaire, de sorte que le logement 5 a une forme tronconique et permet l'introduction de l'une ou l'autre des extrémités d'une barre extensible 7 qui constitue un autre élément dans chacun des ensembles 1 et 2. Cette conformation des logements 5 permet l'introduction de barres extensibles de diamètres différents, l'élimination ou la réduction des jeux entre les extrémités des barres et les parois tronconiques des logements et permet enfin d'utiliser des éléments 3 identiques pour recevoir des extrémités des éléments 7 ayant des dimensions différentes. On évite ainsi des frais d'usinage sur les extrémités des barres extensibles. On remarque d'ailleurs qu'on peut introduire, dans le logement tronconique 5, les extrémités de barres extensibles qui ne font pas un angle droit par rapport à l'organe d'accrochage 3, tout en conservant les mêmes avantages que décrits plus haut. On peut donc appliquer des éléments d'accrochage 3 contre des parois inclinées de bac ou contre des parois verticales. Lors du montage d'un ensemble, la forme en L de chaque organe d'accrochage permet de placer ces supports en appui sur le bord supérieur du bac, ce qui règle automatiquement à la même hauteur les positions des logements 5 et, par conséquent, les emplacements où les extrémités des barres extensibles doivent se trouver. On évite ainsi tout glissement vers le fond du bac, ce qui facilite considérablement le montage. On notera également que la face 8 de chaque élément 3 peut, en outre, être recouverte d'un revêtement anti-dérapant ou d'un segment de bande auto-collante biface.

Chaque barre extensible 7 se compose d'un tube de guidage 8 et d'une tige coulissante 9, dont une extrémité est engagée dans le tube correspondant 8. La tige 9 est filetée et s'engage dans un écrou 10 solidaire à une extrémité du tube 8. Avec cette disposition, il est possible d'immobiliser la barre extensible 7 dans une position telle que ses deux extrémités font pression contre les organes d'accrochage 3, comme indiqué plus haut. On pourrait également introduire un ressort à boudin à l'intérieur du tube 8, afin de faire pression contre la tige 9. Pour augmenter les possibilités d'extension de la barre 7, on pourrait également adjoindre, à chaque segment tubulaire 8, deux tiges filetées s'étendant à ses deux extrémités.

Chaque ensemble ajustable comporte, en outre, un embout 11 qui est mobile par rapport à la barre extensible 7 qui le porte. L'embout 11 peut tourner autour du segment tubulaire 8 et peut coulisser longitudinalement sur ce segment tubulaire, ce qui permet de placer un treillage, soit au centre du bac, soit dans une position plus ou moins proche d'un de ses côtés. L'embout 11 est une pièce allongée ayant des dimensions standard, rigide et présentant un profil déterminé et une série de logements et de creusures permettant de l'adapter à différentes utilisations. Comme on le voit à la fig. 3, à titre d'exemple, un embout 11 peut comporter les éléments de profil suivants: Un trou traversant 12, perforé selon l'axe longitudinal de l'embout et de forme circulaire, de sorte qu'il est possible d'engager dans l'embout une vis permettant de le fixer, par exemple, sur une surface quelconque. Dans ce trou 12 peut également être engagé l'extrémité d'un tuteur ou tout autre segment cylindrique. L'embout 11 comporte également un trou transversal 13 qui permet l'engagement sur la barre 7. Ce trou peut également servir à la fixation de l'embout contre un mur, au moyen d'une vis ou par tout autre moyen de fixation.

Dans la face extrême supérieure de l'embout 11 sont prévues plusieurs creusures ou logements, s'étendant jusqu'à une certaine profondeur. Selon la fig. 3, on a une creusure en forme de U 14 et une creusure axiale 15 traversant le trou 12. Les dimensions de ces deux creusures peuvent varier, de sorte qu'il est possible d'engager dans l'embout, par exemple des profilés en forme de U de 2 mm d'épaisseur et dont la base va jusqu'à 18 mm alors que la hauteur de ces profilés peut aller jusqu'à 15 mm. Ces creusures permettant aussi de recevoir et de maintenir des pièces plates de 3 mm grâce au côté 14a de la creusure en U, des pièces de 4 mm grâce au côté 14b de la creusure en U, ou des pièces plates de 5 mm grâce à la creusure 15. Dans un exemple d'exécution, un logement 16, ménagé dans le côté 14c de la creusure 14, peut recevoir des barres rondes de 4 mm alors que le trou 12 permet de recevoir des barres de 7 mm. Enfin, comme on le voit à la fig. 3, la section du profilé 11 comporte, sur deux côtés opposés, des saignées à profil rectangulaire 17, de sorte que l'embout 11 peut être introduit dans un profilé tubulaire à section rectangulaire dont les cotes intérieures correspondent aux cotes extérieures du profilé 11.

L'embout 11 peut être utilisé seul sans les autres éléments des ensembles décrits ou conjointement avec d'autres embouts, pour d'autres applications selon les exemples suivants.

Par exemple, deux embouts 11, fixés chacun sur deux pieux fichés en terre, permettent de faire tenir un treillage directement sur le terrain.

En introduisant un embout 11 à chaque extrémité d'une barre en forme de U dont la longueur hors toute, y compris les embouts 11, est plus courte de 1 cm qu'une hauteur sol-plafond donnée dans une pièce d'habitation, il est possible de faire tenir cette barre en vissant l'embout d'une des extrémités sur le sol, au moyen d'une vis engagée dans l'orifice 12 et de faire coulisser l'autre embout vers le plafond et le visser à celui-ci.

Revenant à l'application décrite comportant deux ensembles d'éléments ajustables 1 et 2, montés sur un bac 4, on voit à la Fig. 4 que les deux embouts 11 sont maintenus en position inclinée par l'engagement de tétons 18, solidaires des éléments 19 d'un treillage extensible 20. Les deux tétons 18 suffisent pour assujettir le treillage dans une position rigide et inextensible, tout en maintenant en place les éléments indépendants des deux ensembles ajustables 1 et 2.

Dans une exécution avantageuse les éléments d'accrochage sont en matière plastique, la barre extensible comporte une partie métallique et une partie tubulaire en matière composite verre-polyester et l'embout est en matière plastique.

## Revendications

1. Dispositif de support d'un tuteur pour la culture de plantes dans des récipients, caractérisé en ce qu'il comprend un ou plusieurs ensembles d'éléments dont chaque ensemble est constitué de deux organes d'accrochage, d'une barre extensible et d'un ou plusieurs embouts glissant sur la barre, ces éléments étant agencés de manière à être fixés par l'appui de la barre extensible sur les éléments d'accrochage et par l'appui de ces derniers contre des parois opposées du récipient, ainsi que par l'engagement d'une partie extrême d'un tuteur dans chaque embout.

2. Dispositif selon la revendication 1, caractérisé en ce que les dits éléments sont indépendants les uns des autres.

3. Dispositif selon la revendication 2, caractérisé en ce que les organes d'accrochage comportent, dans leurs faces qui sont disposées en vis à vis, un logement destiné à recevoir une extrémité de la barre extensible.

4. Dispositif selon la revendication 3, caractérisé en ce que le logement des organes d'accrochage est limité par une nervure à profil triangulaire qui s'étend selon un contour circulaire, la face interne du logement étant ainsi de forme tronconique.

5. Dispositif selon la revendication 1, caractérisé en ce que l'embout est un élément rigide, profilé, présentant un trou transversal pour l'engagement sur la barre extensible et des logements de différentes sections s'étendant dans sa longueur depuis une face terminale de l'embout.

6. Dispositif selon la revendication 5, caractérisé en ce que l'embout présente un profil général rectangulaire avec deux nervures longitudinales s'étendant au centre de deux côtés opposés.

7. Dispositif selon la revendication 5, caractérisé en ce que l'embout présente un logement à profil en U dont les branches et la base sont de forme rectangulaire allongée et de largeurs différentes.

8. Dispositif selon la revendication 7, caractérisé en ce que l'embout présente en outre en logement central, à profil rectangulaire, s'étendant entre les branches du logement en U parallèlement à ces dernières.

9. Dispositif selon la revendication 8, caractérisé en ce que l'embout présente en outre un trou cylindrique ménagé dans le centre du logement central, le diamètre de ce trou étant supérieur à la largeur du logement central.

10. Dispositif selon la revendication 9, caractérisé en ce que l'embout présente en outre un élargissement en arc de cercle au centre de la base du logement à profil en U.

11. Dispositif selon la revendication 1, caractérisé en ce que les éléments d'accrochage sont en matière plastique, en ce que la barre extensible comporte une partie métallique et une partie tubulaire en matière composite verre-polyester et en ce que l'embout est en matière plastique.

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 541 076 (JACOBI) <br> * Page 2, ligne 34 - page 3, ligne 6; revendications 1-4; figure 2 * | 1 | A 01 G 9/12 |
| A | DE-A-1 943 926 (LEICHT) <br> * Page 3, paragraphes 3,4; pages 8,9; figures * | 1 | |
| D,A | CH-A- 408 516 (PFISTER) <br> * En entier * | 1 | |
| P,A | FR-A-2 585 212 (DUFOUR) <br> * Page 2, ligne 10 - page 3, ligne 18; figures 1-4 * | 1 | |

| | DOMAINES TECHNIQUES RECHERCHES (Int. Cl.4) |
|---|---|
| | A 01 G <br> A 47 G |

Le présent rapport a été établi pour toutes les revendications

| Lieu de la recherche | Date d'achèvement de la recherche | Examinateur |
|---|---|---|
| LA HAYE | 23-11-1987 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)